# EUROPEAN PATENT APPLICATION

(11) **EP 4 773 315 A1**
(43) Date of publication of application: **08.07.2026**
(21) Application number: 24910659.2
(22) Date of filing: 09.12.2024
(51) Int. Cl.: H01M 10/0585, H01M 10/0525

(54) **SECONDARY BATTERY AND PREPARATION METHOD THEREFOR**

(30) Priority: 29.12.2023 CN 202311863247
(71) Applicant: Ningde Amperex Technology Limited, Ningde, Fujian 352100 (CN)
(72) Inventor: CHU, Nan, Ningde, Fujian 352100 (CN); GONG, Zuzhen, Ningde, Fujian 352100 (CN)
(74) Representative: Kraus & Lederer PartGmbB
(86) International application number: PCT/CN2024/137799
(87) International publication number: WO 2025/139728

(57) **Abstract**

This application proposes a secondary battery and a preparation method thereof. An outermost electrode plate of an electrode assembly is a first outer electrode plate, where the first outer electrode plate includes a first current collector and a first active material layer; the first current collector has a first surface facing a first direction and a second surface facing a second direction; the first active material layer is disposed on the second surface; the first direction is a stacking direction of electrode plates and separators of the electrode assembly; and the second direction is opposite to the first direction. The secondary battery further includes a plurality of first adhesive layers, where a portion of the first adhesive layer is bonded between the first surface and an inner wall of an accommodating portion, and another portion of the first adhesive layer is bonded to the first surface and at least a portion of the separator. The provision of the first adhesive layer can reduce the shrinkage of the separator and improve drop resistance of the secondary battery.

## Description

### CROSS-REFERENCE TO RELATED APPLICATIONS

This application claims priority to Chinese Patent Application No. 202311863247.1, filed on December 29, 2023 and entitled "SECONDARY BATTERY AND PREPARATION METHOD THEREOF", which is incorporated herein by reference in its entirety.

### TECHNICAL FIELD

This application relates to the field of battery technology, and in particular, to a secondary battery and a preparation method thereof.

### BACKGROUND

With the rapid development of the battery industry, the application of laminated batteries with advantages such as high energy density and high safety has become increasingly widespread. To increase the energy density of a laminated battery, an outermost electrode plate of an electrode assembly of the laminated battery is typically a single-sided coated electrode plate, meaning that the outermost electrode plate of the laminated battery is generally coated with an active material layer only on a side facing an inner side of the electrode assembly, and a side facing a battery package is provided with an uncoated current collector. However, due to uneven stress on both sides of the outermost single-sided coated electrode plate of the electrode assembly of the laminated battery, the edges of the electrode plate are prone to warping, reducing a contact area between the single-sided coated electrode plate and a separator, which can easily cause the shrinkage of the separator. In situations such as collisions, drops, and internal heat generation of the battery during use, positive and negative electrode plates of the battery easily come into contact with each other, resulting in short circuits.

### SUMMARY

Some embodiments of this application aim to provide a secondary battery and a preparation method thereof to reduce warping of an outermost electrode plate of a laminated battery, thereby reducing the shrinkage of a separator and improving the safety performance of the laminated battery.

To address the technical problem, this application adopts the following technical solution:

According to a first aspect, this application proposes a secondary battery including an accommodating portion and an electrode assembly accommodated within the accommodating portion, where the electrode assembly includes positive electrode plates, separators, and negative electrode plates; along a thickness direction of the positive electrode plates and the negative electrode plates, a plurality of positive electrode plates and a plurality of negative electrode plates are alternately stacked; the separators are disposed between adjacent positive electrode plates and negative electrode plates; along a first direction, an outermost electrode plate of the electrode assembly is a first outer electrode plate, where the first outer electrode plate includes a first current collector and a first active material layer; the first current collector has a first surface facing the first direction and a second surface facing a second direction; the first active material layer is disposed on the second surface; the first direction is a stacking direction; the second direction is opposite to the first direction; and the secondary battery further includes a plurality of first adhesive layers, where a portion of the first adhesive layer is bonded between the first surface and an inner wall of the accommodating portion, and another portion of the first adhesive layer is bonded to the first surface and at least a portion of the separator.

In the above technical solution, since an outer side of the first outer electrode plate of the laminated electrode assembly is typically opposite the accommodating portion, and the accommodating portion is not provided with an active material layer corresponding to the first outer electrode plate, the first outer electrode plate adopts a structure with an active material layer disposed on one surface, which can reduce the space occupied by the first outer electrode plate and increase the volumetric energy density of the secondary battery. A portion of the first adhesive layer bonded between the first surface and the inner wall of the accommodating portion can enhance the integrity between the electrode assembly and the accommodating portion, reducing movement of the electrode assembly within the accommodating portion. The first adhesive layer can also distribute external impact forces on the electrode assembly to the accommodating portion, improving the safety of the secondary battery in scenarios such as drops and impacts. In addition, the first adhesive layer can distribute part of the stress on the first outer electrode plate across the first surface, reducing stress concentration, thereby reducing warping of the first current collector, alleviating lithium precipitation in the secondary battery, and mitigating the shrinkage of the separator. Meanwhile, another portion of the first adhesive layer is bonded to the first surface and at least a portion of the separator, further restricting the shrinkage of the separator adjacent to the first outer electrode plate, enhancing the integrity of the electrode assembly, alleviating lithium precipitation in the secondary battery, and reducing the short circuits caused by direct contact between positive and negative electrodes due to the shrinkage of the separator in scenarios such as drops, impacts, and high temperatures of the secondary battery, thereby further improving the safety of the battery. Moreover, in an existing laminated battery, a thickness of a current collector of a first outer single-sided coated electrode plate is typically more than 50% greater than a thickness of another electrode plate current collector, mitigating uneven stress caused by single-sided coating. In this application, due to the provision of the first adhesive layer, the warping rate of the first outer electrode plate is significantly reduced, allowing the first current collector of the first outer electrode plate to be made thinner, reducing the space occupied by the electrode assembly, and increasing the volumetric energy density of the secondary battery.

In some preferred embodiments, the outermost electrode plate of the electrode assembly is a second outer electrode plate, where the second outer electrode plate includes a second current collector and a second active material layer; the second current collector has a third surface facing the first direction and a fourth surface facing the second direction; the second active material layer is disposed on the third surface; and the secondary battery further includes a plurality of second adhesive layers, where a portion of the second adhesive layer is bonded between the fourth surface and the inner wall of the accommodating portion, and another portion of the second adhesive layer is bonded to the fourth surface and at least a portion of the separator. The electrode assembly has two outermost electrode plates; and the second outer electrode plate is also provided with the second adhesive layer. This can further enhance the energy density, drop resistance, impact resistance, and safety of the secondary battery.

In some preferred embodiments, the first adhesive layer includes a hot-melt adhesive and/or a pressure-sensitive adhesive. At a predetermined temperature and/or pressure, the first adhesive layer melts, and a portion of the first adhesive layer flows from the first surface to separators in another electrode assembly. After the first adhesive layer solidifies, the separators can be bonded to the first surface, thereby restricting the shrinkage of the separators. The process is simple and can be easily implemented during the preparation of the secondary battery.

In some preferred embodiments, a melting point of the first adhesive layer is T°C, where 50°C ≤ T ≤ 70°C. This temperature range causes minimal damage to the secondary battery and facilitates the pressure bonding and molding of the first adhesive layer. In addition, when the secondary battery undergoes thermal runaway, the melting of the first adhesive layer can also absorb part of the heat, thereby mitigating the thermal runaway of the secondary battery.

In some preferred embodiments, the first adhesive layer includes a polyurethane and/or vinyl acetate copolymer. The polyurethane and vinyl acetate copolymer has excellent bonding properties and chemical corrosion resistance, which can extend the service life of the secondary battery and ensure a stable connection between the electrode assembly and the accommodating portion.

In some preferred embodiments, the first outer electrode plate and/or the second outer electrode plate is a positive electrode plate. A current collector of the positive electrode plate is typically an aluminum foil. A current collector of a negative electrode plate is typically a copper foil. For a pouch-type secondary battery, a material of the accommodating portion is typically an aluminum-plastic film. If the outermost single-sided coated electrode plate is a negative electrode plate, an electrochemical reaction may occur between the copper foil in the negative electrode plate and aluminum in the aluminum-plastic film, posing a safety hazard. In addition, the cost of the copper foil is higher than that of the aluminum foil. Therefore, the first outer electrode plate and/or the second outer electrode plate is preferably used as the positive electrode plate.

In some preferred embodiments, along the first direction, a thickness of the first adhesive layer is H µm, where 3 µm ≤ H ≤ 20 µm, enabling the secondary battery to have a relatively high energy density while improving the bonding stability of the separators.

In some preferred embodiments, along a width direction of the first current collector, the first current collector has a first edge and a second edge; along a length direction of the first current collector, the first current collector has a third edge and a fourth edge; positions close to the first edge and the second edge on the first surface are each provided with the first adhesive layer, so that during hot pressing, the two first adhesive layers can flow to two sides of the first current collector in the width direction to bond the separators on the two sides, thereby restricting the shrinkage of the separators in the width direction; and/or positions close to the third edge and the fourth edge on the first surface are each provided with the first adhesive layer, so that during hot pressing, the two first adhesive layers can flow to two sides of the first current collector in the length direction to bond the separators on the two sides, thereby restricting the shrinkage of the separators in the length direction.

In some preferred embodiments, along the first direction, the electrode assembly includes a plurality of separators; and the first adhesive layer is configured to bond at least two separators. This allows for mutual restriction of the shrinkage of the two separators, thereby reducing the short circuits caused by direct contact between the positive and negative electrode plates, and effectively improving the safety of the secondary battery.

According to a second aspect, this application further proposes a preparation method of a secondary battery. The method includes:
providing positive electrode plates, negative electrode plates, and separators, alternately stacking a plurality of positive electrode plates and a plurality of negative electrode plates along a thickness direction of the positive electrode plates and the negative electrode plates, and disposing the separators between adjacent positive electrode plates and negative electrode plates to form an electrode assembly;
adopting a first outer electrode plate as an outermost electrode plate along a first direction, where the first outer electrode plate has a first surface facing the first direction and a second surface facing a second direction, the second surface has a first active material layer, the first direction is a stacking direction, and the second direction is opposite to the first direction;
bonding a first adhesive layer to the first surface;
accommodating the electrode assembly within an accommodating portion and bonding the first adhesive layer to an inner wall of the accommodating portion; and
melting the first adhesive layer at a first preset temperature and pressing the accommodating portion at a position corresponding to the first adhesive layer on an outer surface of the accommodating portion, such that the molten first adhesive layer flows to at least a portion of the separator.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

One or more embodiments are exemplarily described with reference to corresponding drawings. These exemplary descriptions do not limit these embodiments. Elements with the same reference numerals in the drawings represent similar elements. Unless otherwise specified, the drawings do not impose scale limitations.
FIG. 1 is an exploded view of a secondary battery according to some embodiments of this application;
FIG. 2 is a schematic structural diagram of a secondary battery according to some embodiments of this application;
FIG. 3 is a schematic diagram of an internal structure of a secondary battery according to some embodiments of this application;
FIG. 4 is a schematic diagram of stacking of a positive electrode plate and a negative electrode plate according to some embodiments of this application;
FIG. 5 is a schematic structural diagram of a first outer electrode plate according to some embodiments of this application;
FIG. 6 is a schematic structural diagram of various types of first adhesive layers according to some embodiments of this application;
FIG. 7 is a schematic diagram of distribution of various types of first adhesive layers on a first surface according to some embodiments of this application; and
FIG. 8 is a schematic structural diagram of a second outer electrode plate according to some embodiments of this application.

### Description of reference signs:

100. secondary battery;
10. accommodating portion; 11. first housing; 111. first cavity; 12. second housing; 121. second cavity;
20. electrode assembly; 21. positive electrode plate; 211. positive electrode current collector; 212. positive electrode active material layer; 22. negative electrode plate; 221. negative electrode current collector; 222. negative electrode active material layer; 23. separator; 24. first outer electrode plate; 241. first current collector; 241a. first edge; 241b. second edge; 241c. third edge; 241d. fourth edge; 2411. first surface; 2412. second surface; 242. first active material layer; 25. second outer electrode plate; 251. second current collector; 2511. third surface; 2512. fourth surface; 252. second active material layer;
30. tab; 31. positive electrode tab; 32. negative electrode tab;
40. first adhesive layer;
50. second adhesive layer;
Z. first direction; G. second direction; Y. third direction; and X. fourth direction.

### DETAILED DESCRIPTION

Some embodiments of the technical solution of this application will be described in detail below with reference to the drawings. The following embodiments are only used to more clearly illustrate the technical solution of this application and therefore are used as just examples which do not constitute any limitations on the protection scope of this application.

In the description of some embodiments of this application, technical terms such as "first" and "second" are used only to distinguish different objects and cannot be understood as indicating or implying relative importance or implying the number, specific order, or primary-secondary relationship of the indicated technical features. In the description of some embodiments of this application, the terms "a plurality of" and "several" mean two or more, unless explicitly and specifically defined otherwise.

In the description of some embodiments of this application, the term "and/or" merely describes an association relationship between associated objects, indicating that three relationships may exist. For example, A and/or B may indicate the following three cases: presence of only A; presence of both A and B; and presence of only B. In addition, the character "/" in this specification generally indicates an "or" relationship between the contextually associated objects.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. In addition, technical features involved in different embodiments of this application described below can be combined with each other as long as they do not conflict with each other.

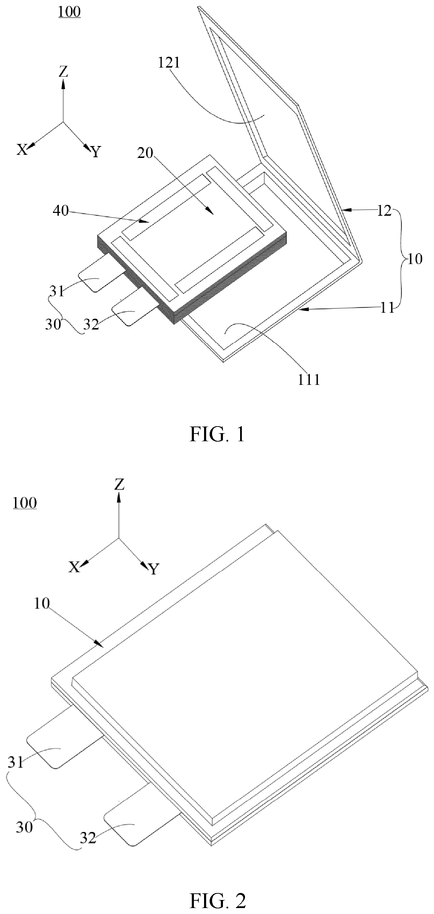

According to a first aspect, this application proposes a secondary battery 100. Referring to FIG. 1 and FIG. 2, the secondary battery 100 includes an accommodating portion 10, an electrode assembly 20, a tab 30, and a first adhesive layer 40. The accommodating portion 10 serves as a mounting base and container for the remaining components of the secondary battery 100. The electrode assembly 20 is accommodated within the accommodating portion 10, and the electrode assembly 20 is a core component for achieving charging and discharging of the secondary battery 100. The first adhesive layer 40 is bonded between the electrode assembly 20 and an inner wall of the accommodating portion 10. One end of the tab 30 is electrically connected to the electrode assembly 20, and another end extends out of the accommodating portion 10. The following describes the specific structure of the secondary battery 100 by taking the secondary battery 100 being a lithium-ion battery as an example. It can be understood that in another embodiment of this application, the secondary battery 100 may alternatively be other types of secondary batteries, such as a sodium-ion battery.

Regarding the accommodating portion 10, referring to FIG. 1 and FIG. 2, the accommodating portion 10 may be made of a flexible material, forming a mounting base, container, and outer protective structure of the secondary battery 100. The accommodating portion 10 defines an accommodation cavity (not shown in the figure). The accommodation cavity can be used to accommodate an electrolyte (not shown in the figure) and the electrode assembly 20. For example, the accommodating portion 10 includes a first housing 11 and a second housing 12. The first housing 11 is provided with a first cavity 111, and the second housing 12 is provided with a second cavity 121. The electrode assembly 20 may be placed in the first cavity 111. The second housing 12 covers the first cavity 111 of the first housing 11, and the second cavity 121 is in communication with the first cavity 111 to form the accommodation cavity. By hot-pressing and sealing junctions at edges of the two housings, the two housings can be bonded to each other to seal the accommodation cavity. In some other embodiments, the accommodating portion 10 may alternatively be made of a hard material. For example, the accommodating portion 10 may be formed by stamping a single metal sheet. A thickness of the metal sheet may be set to 0.1 mm to 0.4 mm to ensure the stamping strength of the accommodating portion 10. The material of the metal sheet may include a conductive metal material such as aluminum, steel, stainless steel, nickel, copper, or magnesium alloy, allowing the accommodating portion 10 to lead out one polarity of the secondary battery 100. For example, the accommodating portion 10 serves as a positive electrode or a negative electrode of the secondary battery 100.

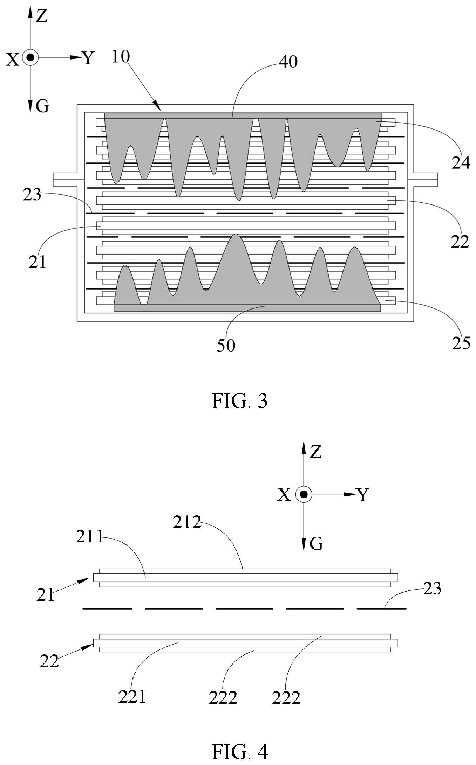

Regarding the electrode assembly 20, the electrode assembly 20 is accommodated within the accommodating portion 10. Referring to FIG. 3, the electrode assembly 20 includes positive electrode plates 21, separators 23, and negative electrode plates 22. Along a thickness direction (a first direction Z) of the positive electrode plates 21 and the negative electrode plates 22, a plurality of positive electrode plates 21 and a plurality of negative electrode plates 22 are alternately stacked. The separators 23 are disposed between adjacent positive electrode plates 21 and negative electrode plates 22.

Regarding the positive electrode plate 21, referring to FIG. 3 and FIG. 4, the positive electrode plate 21 includes a positive electrode current collector 211 and a positive electrode active material layer 212. The positive electrode current collector 211 may be an aluminum foil with an overall flat and strip-shaped structure. The positive electrode active material layer 212 may be disposed on at least one surface of the positive electrode current collector 211. For example, two opposite surfaces of the positive electrode current collector 211 in a thickness direction (the first direction Z) are each provided with the positive electrode active material layer 212. The positive electrode active material layer 212 includes a positive electrode active material, a conductive agent, a binder, and the like. These materials are mixed, stirred well, and applied onto the positive electrode current collector 211 to form the positive electrode active material layer 212. The positive electrode active material may be selected from one or more of lithium nickel cobalt manganese oxide, lithium cobalt oxide, lithium iron phosphate, lithium nickel cobalt manganese oxide, lithium manganese oxide, lithium manganese iron phosphate, and a cobalt-free material.

Regarding the negative electrode plate 22, referring to FIG. 3 and FIG. 4, the negative electrode plate 22 includes a negative electrode current collector 221 and a negative electrode active material layer 222. The negative electrode current collector 221 serves as a conductive substrate and may be a copper foil with an overall flat and strip-shaped structure. In some other embodiments, the negative electrode current collector 221 may alternatively be a nickel foil or a polymer copper foil (a surface of the copper foil is provided with a polymer such as polyethylene, polypropylene, or polyamide). The negative electrode active material layer 222 may be disposed on at least one surface of the negative electrode current collector 221. For example, two opposite surfaces of the negative electrode current collector 221 in a thickness direction (the first direction Z) are each provided with the negative electrode active material layer 222. The negative electrode active material layer 222 includes a negative electrode active material, a conductive agent, a binder, and the like. These material components are mixed, stirred well, and applied onto the negative electrode current collector 221 to form the negative electrode active material layer 222. The negative electrode active material may be selected from one or more of graphite, soft carbon, hard carbon, carbon fiber, elemental silicon, a silicon oxide compound, or a silicon alloy.

Regarding the separator 23, referring to FIG. 3 and FIG. 4, the positive electrode plates 21 and the negative electrode plates 22 are alternately stacked along the first direction Z. The separators 23 are disposed between adjacent positive electrode plates 21 and negative electrode plates 22. The separators 23 may be ceramiccontaining PE separators or PP separators and are used to insulate and separate the positive electrode plates 21 from the negative electrode plates 22.

Regarding the tab 30, referring to FIG. 1 and FIG. 2, the tab 30 includes a positive electrode tab 31 and a negative electrode tab 32. Both the positive electrode tab 31 and the negative electrode plate 32 may use a metal sheet structure, for example, an aluminum sheet, a copper sheet, or a nickel sheet. One end of the positive electrode tab 31 is electrically connected to the positive electrode plate 21 within the accommodating portion 10 through a manner such as welding or bonding via a conductive adhesive, and another end extends out of the accommodating portion 10. One end of the negative electrode tab 32 is electrically connected to the negative electrode plate 22 within the accommodating portion 10, and another end extends out of the accommodating portion 10 for an electrical connection to an external electric device.

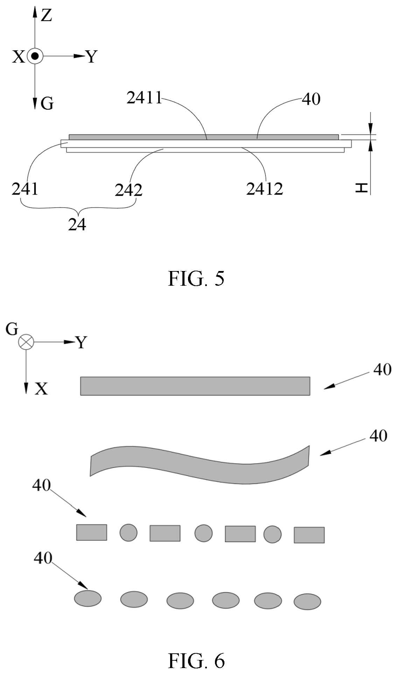

Referring to FIG. 3 and FIG. 5, along the first direction Z, the positive electrode plates 21, the separators 23, and the negative electrode plates 22 are stacked to form multiple layers. An outermost electrode plate of the electrode assembly 20 in the first direction Z is a first outer electrode plate 24. The first outer electrode plate 24 includes a first current collector 241 and a first active material layer 242. The first current collector 241 has a first surface 2411 facing the first direction Z and a second surface 2412 facing the second direction G. The first active material layer 242 is disposed on the second surface 2412. The first surface 2411 is not provided with the first active material layer 242. An outer side of the first outer electrode plate 24 is opposite the accommodating portion 10. The accommodating portion 10 is not provided with an active material layer corresponding to the first outer electrode plate 24. Therefore, the first outer electrode plate 24 adopts a structure with an active material layer on one surface, which can reduce the space occupied by the first outer electrode plate 24 and increase the volumetric energy density of the secondary battery 100. The first direction Z is opposite to the second direction G.

The first outer electrode plate 24 may be a positive electrode plate 21. The first current collector 241 is typically an aluminum foil. The aluminum foil has excellent conductivity and corrosion resistance. In addition, the aluminum foil also has the characteristics of light weight, good processability, low cost, and the like, meeting the conductivity and current collection requirements of an internal current collector of the secondary battery 100. Meanwhile, the aluminum foil can also effectively improve the heat dissipation performance of the battery, ensuring that the battery maintains a relatively low temperature during operation.

The current collector of the positive electrode plate 21 is typically an aluminum foil. The current collector of the negative electrode plate 22 is typically a copper foil. For a pouch-type secondary battery 100, a material of the accommodating portion 10 is typically an aluminum-plastic film. If the outermost single-sided coated electrode plate is the negative electrode plate 22, an electrochemical reaction may occur between the copper foil in the negative electrode plate 22 and aluminum in the aluminum-plastic film, posing a safety hazard. In addition, the cost of the copper foil is higher than that of the aluminum foil. Therefore, the first outer electrode plate 24 and/or the second outer electrode plate 25 is preferably used as the positive electrode plate 21.

Regarding the first adhesive layer 40, referring to FIG. 3 and FIG. 5, a portion of the first adhesive layer 40 is bonded between the first surface 2411 and an inner wall of the accommodating portion 10, enhancing the integrity between the electrode assembly 20 and the accommodating portion 10, and reducing movement of the electrode assembly 20 within the accommodating portion 10. The first adhesive layer 40 can also distribute external impact forces on the electrode assembly 20 to the accommodating portion 10, improving the safety of the secondary battery 100 in scenarios such as drops and impacts. In addition, the first adhesive layer 40 can distribute part of the stress on the first outer electrode plate 24 across the first surface 2411, reducing stress concentration, thereby reducing warping of the first current collector 241, alleviating lithium precipitation in the secondary battery 100, and mitigating the shrinkage of the separator 23. Meanwhile, another portion of the first adhesive layer 40 is bonded to the first surface 2411 and at least a portion of the separator 23, further restricting the shrinkage of the separator 23 adjacent to the first outer electrode plate, enhancing the integrity of the electrode assembly 20, alleviating lithium precipitation in the secondary battery 100, and reducing the short circuits caused by direct contact between the positive and negative electrodes due to the shrinkage of the separator 23 in scenarios such as drops, impacts, and high temperatures of the secondary battery 100, thereby further improving the safety of the battery. Moreover, in an existing laminated battery, a current collector of a first outer single-sided coated electrode plate is typically set to be more than 50% (above 20 µm) thicker than another electrode plate current collector, mitigating uneven stress caused by single-sided coating. In this application, due to the provision of the first adhesive layer 40, the warping rate of the first outer electrode plate 24 is significantly reduced, allowing the first current collector 241 of the first outer electrode plate 24 to be made thinner, reducing the space occupied by the electrode assembly 20, and increasing the volumetric energy density of the secondary battery 100.

Since the provision of the first adhesive layer 40 can reduce warping of the first current collector 241, the first adhesive layer 40 is particularly suitable for the positive electrode plate 21. In the existing laminated battery, the current collector of the first outer single-sided coated electrode plate is typically set to be more than 50% (above 20 µm) thicker than another electrode plate current collector, mitigating uneven stress caused by single-sided coating. In some embodiments of this application, since the first adhesive layer 40 can reduce warping of the first current collector 241, the thickness of the first current collector 241 can be appropriately reduced. For example, the first current collector 241 with a thickness of 7 µm to 12 µm is used, increasing the energy density of the secondary battery 100.

The first adhesive layer 40 includes a hot-melt adhesive. When the first surface 2411 of the first outer electrode plate 24 is provided with the first adhesive layer 40, at a predetermined temperature, the first adhesive layer 40 melts, and a portion of the first adhesive layer 40 flows from the first surface 2411 to the separators 23 in another electrode assembly 20. After the first adhesive layer 40 solidifies, the separators 23 can be bonded to the first surface 2411, thereby restricting the shrinkage of the separators 23; and/or the first adhesive layer 40 includes a pressure-sensitive adhesive. When the first surface 2411 of the first outer electrode plate 24 is provided with the first adhesive layer 40, during accommodation of the electrode assembly 20 in a housing, the installation of the electrode assembly 20 or the housing allows the first adhesive layer 40 to be bonded between the electrode assembly 20 and an inner wall of the housing. In addition, during pressing, a portion of the first adhesive layer 40 can flow to the separators 23, so that the separators 23 can be bonded to the first surface 2411 of the first outer electrode plate 24, thereby restricting the shrinkage of the separators 23.

A melting point of the first adhesive layer 40 is T°C, where 50°C ≤ T ≤ 70°C. When the temperature reaches this melting point, the first adhesive layer 40 melts and flows to bond the separators 23. For example, when the first adhesive layer 40 includes a hot-melt adhesive and a pressure-sensitive adhesive, applying a pressure of 1.0 MPa to 2.5 MPa to the first adhesive layer 40 in an environment at 60°C to 90°C allows a portion of the first adhesive layer 40 to melt and flow to the separators 23. This temperature range causes minimal damage to the secondary battery 100 and facilitates the pressure bonding and molding of the first adhesive layer 40. In addition, when the secondary battery 100 undergoes thermal runaway, the melting of the first adhesive layer 40 can also absorb part of the heat, thereby mitigating the thermal runaway of the secondary battery 100.

Regarding the material of the first adhesive layer 40, the accommodating portion 10 needs to be filled with an electrolyte. The electrolyte is typically corrosive and may corrode the first adhesive layer 40, affecting the bonding stability of the first adhesive layer 40. For example, the electrolyte includes lithium salt compounds such as lithium hexafluorophosphate, lithium tetrafluoroborate, or lithium perchlorate, carbonate solvents such as dimethoxyethane, dimethyl carbonate, or ethylene carbonate, and additives such as flame retardants and inhibitors. In some embodiments of this application, the first adhesive layer 40 may include a polyurethane and/or vinyl acetate copolymer. The polyurethane and vinyl acetate copolymer has excellent bonding properties and chemical corrosion resistance, which can extend the service life of the secondary battery 100 and ensure a stable connection between the electrode assembly 20 and the accommodating portion 10.

Regarding a thickness of the first adhesive layer 40, an excessively large thickness affects the energy density of the battery, while an excessively small thickness may lead to unstable bonding between the electrode assembly 20 and the accommodating portion 10. In some embodiments of this application, along the first direction Z, a thickness of the first adhesive layer 40 is H µm, where 3 ≤ H ≤ 20, enabling the secondary battery 100 to have a relatively high energy density while ensuring stable bonding between the electrode assembly 20 and the accommodating portion 10. For example, a hot-melt adhesive and/or pressure-sensitive adhesive with a thickness of 8 µm to 80 µm is applied onto the first surface 2411 of the first outer electrode plate 24. After part of the hot-melt adhesive and/or pressure-sensitive adhesive flows to bond the separators 23, a first adhesive layer 40 with a thickness of 3 µm to 20 µm is formed on the first surface 2411, enabling the secondary battery 100 to have a relatively high energy density, and improving the bonding stability of the separators 23.

After flowing, the first adhesive layer 40 is configured to bond at least two separators 23, for example, to bond two separators 23 which are a first separator and a second separator respectively. The shrinkage of the first separator can drive the stretching of the second separator, and similarly, the shrinkage of the second separator can drive the stretching of the first separator. This allows for mutual restriction of the shrinkage of the first separator and the second separator, thereby reducing the short circuits caused by direct contact between the positive and negative electrode plates, and effectively improving the safety of the secondary battery 100.

Regarding the shape of the first adhesive layer 40, referring to FIG. 5 and FIG. 6, when observed along a direction (the second direction G) perpendicular to the first surface 2411, the first adhesive layer 40 may be linear, curved, intermittent dotted, intermittent dotted-linear, or the like. When the first adhesive layer 40 is applied onto the first surface 2411 of the first outer electrode plate 24, the first adhesive layer 40 may be positioned 10 mm from an edge of the first surface 2411, facilitating the flow of a portion of the first adhesive layer 40 to the separators 23 after hot pressing of the first adhesive layer 40.

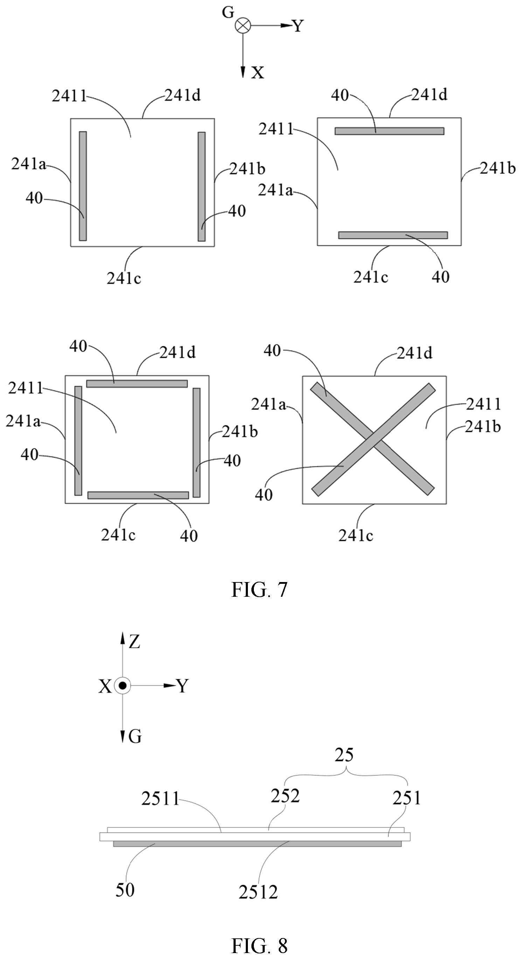

For example, referring to FIG. 3 and FIG. 7, along a width direction (a third direction Y) of the first current collector 241, the first current collector 241 has a first edge 241a and a second edge 241b. Positions close to the first edge 241a and the second edge 241b on the first surface 2411 are each provided with the first adhesive layer 40, so that during hot pressing, the two first adhesive layers 40 can flow to two sides of the first current collector 241 in the width direction to bond the separators 23 on the two sides, thereby restricting the shrinkage of the separators 23 in the width direction; and/or along a length direction (a fourth direction X) of the first current collector 241, the first current collector 241 has a third edge 241c and a fourth edge 241d. Positions near the third edge 241c and the fourth edge 241d on the first surface 2411 are each provided with the first adhesive layer 40, so that during hot pressing, the two first adhesive layers 40 can flow to two sides of the first current collector 241 in the length direction to bond the separators 23 on the two sides, thereby restricting the shrinkage of the separators 23 in the length direction. Alternatively, at least two first adhesive layers 40 are arranged in a crossed manner on the first surface 2411, ensuring that the first adhesive layers 40 can flow to the separators 23.

Referring to FIG. 3 and FIG. 8, along the second direction G, an outermost electrode plate of the electrode assembly 20 is a second outer electrode plate 25. The second outer electrode plate 25 includes a second current collector 251 and a second active material layer 252. The second current collector 251 has a third surface 2511 facing the first direction Z and a fourth surface 2512 facing the second direction G. The second outer electrode plate 25 may also adopt single-sided coating. For example, the second active material layer 252 is disposed only on the third surface 2511. The fourth surface 2512 is opposite the accommodating portion 10. The accommodating portion 10 is not provided with an active material layer corresponding to the second outer electrode plate 25. Therefore, the fourth surface 2512 may be an uncoated foil (without an active material layer), reducing the space occupied by the second outer electrode plate 25 and increasing the volumetric energy density of the secondary battery 100.

Referring to FIG. 3 and FIG. 8, the secondary battery 100 further includes a plurality of second adhesive layers 50. A portion of the second adhesive layer 50 is bonded between the fourth surface 2512 and the inner wall of the accommodating portion 10, enhancing the integrity between the electrode assembly 20 and the accommodating portion 10, and reducing movement of the electrode assembly 20 within the accommodating portion 10. In addition, since the second adhesive layer 50 can distribute part of the stress on the second outer electrode plate 25 across the fourth surface 2512, reducing stress concentration, thereby reducing warping of the second outer electrode plate 25. The electrode assembly has two outermost electrode plates. The second outer electrode plate 25 is also provided with the second adhesive layer 50. This can further enhance the energy density, drop resistance, impact resistance, and safety of the secondary battery 100.

Another portion of the second adhesive layer 50 is bonded to the fourth surface 2512 and at least a portion of the separator 23, further restricting the shrinkage of the separator 23, enhancing the integrity of the electrode assembly 20, reducing the short circuits caused by direct contact between the positive and negative electrode plates, and further improving the impact resistance of the secondary battery 100. In addition, due to the provision of the second adhesive layer 50, the warping rate of the second outer electrode plate 25 is significantly reduced, allowing the second current collector 251 of the second outer electrode plate 25 to be made thinner, reducing the space occupied by the electrode assembly 20, and increasing the volumetric energy density of the secondary battery 100. Similar to the first adhesive layer 40, the second adhesive layer 50 may also include a hot-melt adhesive and/or a pressure-sensitive adhesive, with a melting point of 50°C to 70°C.

The second outer electrode plate 25 may be a positive electrode plate 21. The second current collector 251 is an aluminum foil. Since the provision of the first adhesive layer 40 can reduce warping of the first current collector 241, the first adhesive layer 40 is particularly suitable for the positive electrode plate 21. Optionally, the second outer electrode plate 25 may be a negative electrode plate 22. The second current collector 251 is a copper foil. The copper foil has relatively high strength and is less prone to deformation, and the provision of the second adhesive layer 50 can also reduce warping of the second current collector 251. Therefore, the thickness of the copper foil can be appropriately reduced, reducing the space occupied by the electrode assembly 20, and increasing the volumetric energy density of the secondary battery 100.

In some embodiments of this application, the first outer electrode plate 24 adopts a structure with an active material layer disposed on one surface, which can reduce the space occupied by the first outer electrode plate 24 and increase the volumetric energy density of the secondary battery 100. A portion of the first adhesive layer 40 bonded between the first surface 2411 and an inner wall of the accommodating portion 10 can enhance the integrity between the electrode assembly 20 and the accommodating portion 10, reducing movement of the electrode assembly 20 within the accommodating portion 10. In addition, the first adhesive layer 40 can distribute part of the stress on the first outer electrode plate 24 across the first surface 2411, reducing stress concentration, thereby reducing warping of the first current collector 241, mitigating the shrinkage of the separator 23, and improving the impact resistance of the secondary battery 100. Meanwhile, another portion of the first adhesive layer 40 is bonded to the first surface 2411 and at least a portion of the separator 23, further restricting the shrinkage of the separator 23, alleviating lithium precipitation in the secondary battery, enhancing the integrity of the electrode assembly 20, reducing the short circuits caused by direct contact between the positive and negative electrode plates 22, and further improving the impact resistance of the secondary battery 100. Moreover, due to the provision of the first adhesive layer 40, the warping rate of the first outer electrode plate 24 is significantly reduced, allowing the first current collector 241 of the first outer electrode plate 24 to be made thinner, reducing the space occupied by the electrode assembly 20, and increasing the volumetric energy density of the secondary battery 100.

According to a second aspect, some embodiments of this application further propose a method for preparing the secondary battery according to any one of these embodiments of the first aspect. The method includes the following steps.

S100: Provide positive electrode plates, negative electrode plates, and separators, alternately stack a plurality of positive electrode plates and a plurality of negative electrode plates along a thickness direction of the positive electrode plates and the negative electrode plates, and dispose the separators between adjacent positive electrode plates and negative electrode plates to form an electrode assembly.

S200: Adopt a first outer electrode plate as an outermost electrode plate along a first direction, where the first outer electrode plate has a first surface facing the first direction and a second surface facing a second direction, the second surface has a first active material layer, the first direction is a stacking direction, and the second direction is opposite to the first direction.

S300: Bond a first adhesive layer to the first surface, where the first adhesive layer may be disposed at a position not exceeding 10 mm from the first surface.

S400: Accommodate the electrode assembly within an accommodating portion and bond the first adhesive layer to an inner wall of the accommodating portion.

S500: Melt the first adhesive layer at a first preset temperature and press the accommodating portion at a position corresponding to the first adhesive layer on an outer surface of the accommodating portion, such that the molten first adhesive layer flows to at least a portion of the separator, thereby bonding the first surface to the separator to restrict the shrinkage of the separator, and improving impact resistance of the secondary battery.

In some embodiments of this application, a lithium-ion battery was used as an example, and a drop test was conducted on the lithium-ion battery.

### Example 1

### Preparation of lithium-ion battery

(1) Preparation of positive electrode plate: Lithium cobalt oxide (LiCoO₂) as a positive electrode active material, conductive carbon black (Super P), and polyvinylidene fluoride (PVDF) were mixed at a weight ratio of 97.5:1.0:1.5. N-methylpyrrolidone (NMP) was added as a solvent. The resulting mixture was prepared into a slurry with a solid content of 75wt%, and the slurry was stirred well. An aluminum foil with a length of 87 mm, a width of 60 mm, and a thickness of 8 µm was used as a positive electrode current collector. One end of the aluminum foil as the positive electrode current collector in a length direction was cut to reserve a positive electrode tab with a length of 7 mm and a width of 5 mm, where an uncut portion was a coated portion with a length of 80 mm and a width of 60 mm. The slurry was uniformly applied onto one surface of the coated portion and dried to obtain a positive electrode plate with one surface coated with a positive electrode active material layer. The above steps were repeated on another surface of the coated portion to obtain a positive electrode plate with two surfaces coated with the positive electrode active material layer. One positive electrode plate with one surface coated with the positive electrode active material layer was reserved as a first outer electrode plate.
(2) Preparation of negative electrode plate: Graphite was used as a negative electrode active material. The graphite as the negative electrode active material, styrene-butadiene rubber (SBR) as a binder, and sodium carboxymethyl cellulose (CMC) as a thickener were mixed at a weight ratio of 96:2:2. Deionized water was added as a solvent. The resulting mixture was prepared into a slurry with a solid content of 70wt%, and the slurry was stirred well. A copper foil with a length of 88.2 mm, a width of 60 mm, and a thickness of 5 µm was used as a negative electrode current collector. One end of the copper foil as the negative electrode current collector in a length direction was cut to reserve a negative electrode tab with a length of 7 mm and a width of 5 mm, where an uncut portion was a coated portion with a length of 81.2 mm and a width of 60 mm. The slurry was uniformly applied onto one surface of the coated portion and dried to obtain a negative electrode plate with one surface coated with a negative electrode active material layer. The above steps were repeated on another surface of the coated portion to obtain a negative electrode plate with two surfaces coated with the negative electrode active material layer. One negative electrode plate with one surface coated with the negative electrode active material layer was reserved as a second outer electrode plate.
(3) Preparation of electrolyte: In a dry argon atmosphere, ethylene carbonate (EC), ethyl methyl carbonate (EMC), and diethyl carbonate (DEC) were first mixed at a mass ratio of EC:EMC:DEC = 30:50:20 to form a base organic solvent. Lithium hexafluorophosphate (LiPF₆) was then added to the base organic solvent, dissolved, and mixed well to obtain an electrolyte in which a mass concentration of LiPF₆ was 12.5%.
(4) Preparation of separator: A polyethylene porous film was used as a substrate layer. A ceramic layer containing aluminum oxide ceramic and PVDF binder was applied onto one side surface of the substrate layer as a separator (CCS), where a mass percentage of aluminum oxide ceramic in the ceramic layer was 95%.
(5) Preparation of electrode assembly: The positive electrode plates, separators, and negative electrode plates were alternately stacked in sequence for 10 layers, where a bottommost electrode plate was the second outer electrode plate; a topmost electrode plate was the first outer electrode plate. The separators were disposed between adjacent positive electrode plates and negative electrode plates to form an electrode assembly for later use.
(6) Assembly of electrode assembly: An aluminum-plastic film (an accommodating portion) formed by punching was placed in an assembly fixture with a cavity facing upward. A polyurethane adhesive layer with a thickness of 8 µm (a first adhesive layer with an initial thickness and a melting point of 60°C) was disposed on an edge of an outer surface of the first outer electrode plate of the electrode assembly. The electrode assembly was placed in the cavity, and sealing portions made of lowdensity polyethylene were provided at the two tabs, followed by applying external force to press tightly. Then, the electrode assembly was covered with another aluminum-plastic film formed by punching and provided with a cavity facing downward. The edges of the two aluminum-plastic films were heat-sealed using a hot-pressing manner. In an environment at 80°C, the aluminum-plastic film was hot-pressed at a position corresponding to the polyurethane adhesive layer to form the first adhesive layer, where the hot-pressing pressure was controlled at 2.0 MPa, so that the polyurethane adhesive layer flowed to the separators.
(7) Electrolyte injection and sealing: An electrolyte was injected into the assembled electrode assembly, followed by processes such as vacuum sealing, standing, hot-pressing formation, and shaping to obtain the lithium-ion battery.

The relevant parameters for Examples 2 to 17 and Comparative Example 1 were shown in Table 1 below, where no first adhesive layer and no second adhesive layer were disposed in Comparative Example 1.

### Drop test:

The lithium-ion battery was mounted in a fixture and subjected to a drop test using drop equipment from a height of 1.5 m above the ground in the following sequence: head, tail, head right corner, tail right corner, head left corner, tail left corner (at an angle of 45 ± 15°). This process was repeated for 100 cycles. After the drop test, the appearance of the lithium-ion battery was inspected. The pass criteria for the drop test included: no smoke, no fire, and no electrolyte leakage. The lithium-ion battery was disassembled to observe the flow and bonding condition of the first adhesive layer, and the thickness of the first adhesive layer (the thickness after pressure bonding of the first adhesive layer) between the first outer electrode plate and the accommodating portion was recorded.

The test results were shown in Table 1 below.

**Table 1**

| | Material of first adhesive layer | Melting point of first adhesive layer (°C) | Thickness of first adhesive layer after pressed (µm) | Number of separators bonded by first adhesive layer | Whether second adhesive layer is present | Number of separators bonded by second adhesive layer | Drop failure | First outer electrode plate interface |
|---|---|---|---|---|---|---|---|---|
| Comparative Example 1 | / | / | 0 | 0 | No | 0 | 19% | Severe black spots |
| Example 1 | Polyurethane | 60 | 1 | 1 | No | 0 | 8% | Slight black spots |
| Example 2 | Polyurethane | 60 | 3 | 1 | No | 0 | 7% | No black spot |
| Example 3 | Polyurethane | 60 | 5 | 1 | No | 0 | 7% | No black spot |
| Example 4 | Polyurethane | 60 | 8 | 1 | No | 0 | 6% | No black spot |
| Example 5 | Polyurethane | 60 | 10 | 1 | No | 0 | 6% | No black spot |
| Example 6 | Polyurethane | 60 | 15 | 1 | No | 0 | 5% | No black spot |
| Example 7 | Polyurethane | 60 | 18 | 1 | No | 0 | 5% | No black spot |
| Example 8 | Polyurethane | 60 | 20 | 1 | No | 0 | 6% | No black spot |
| Example 9 | Polyurethane | 60 | 23 | 1 | No | 0 | 7% | No black spot |
| Example 10 | Ethylene-vinyl acetate copolymer | 70 | 1 | 1 | No | 0 | 7% | Slight black spots |
| Example 11 | Polyurethane | 50 | 1 | 1 | No | 0 | 9% | Slight black spots |
| Example 12 | Polyurethane | 60 | 10 | 2 | No | 0 | 5% | No black spot |
| Example 13 | Polyurethane | 60 | 10 | 3 | No | 0 | 4% | No black spot |
| Example 14 | Polyurethane | 60 | 10 | 4 | No | 0 | 3% | No black spot |
| Example 15 | Polyurethane | 60 | 10 | 5 | No | 0 | 3% | No black spot |
| Example 16 | Polyurethane | 60 | 10 | 2 | Yes | 2 | 3% | No black spot |
| Example 17 | Polyurethane | 60 | 10 | 3 | Yes | 4 | 1% | No black spot |

According to Table 1, it can be seen from Examples 1 to 17 and Comparative Example 1 that when the first adhesive layer is used between the electrode assembly and the accommodating portion, the drop resistance of the lithium-ion battery can be effectively improved. This is because a portion of the first adhesive layer is bonded between the first surface and an inner wall of the accommodating portion, enhancing the integrity between the electrode assembly and the accommodating portion, and reducing movement of the electrode assembly within the accommodating portion. The first adhesive layer can also distribute external impact forces on the electrode assembly to the accommodating portion, improving the safety of the secondary battery in scenarios such as drops and impacts. In addition, the first adhesive layer can distribute part of the stress on the first outer electrode plate across the first surface, reducing stress concentration, thereby reducing warping of the first current collector, alleviating lithium precipitation in the secondary battery, and mitigating the shrinkage of the separators. When the lithium-ion battery is subjected to drop impact, the separator can consistently separate the positive and negative electrode plates, reduce the occurrence of short circuits, and improve the drop resistance of the lithium-ion battery. Meanwhile, another portion of the first adhesive layer is bonded to the first surface and at least a portion of the separator, further restricting the shrinkage of the separator adjacent to the first outer electrode plate, enhancing the integrity of the electrode assembly, reducing the short circuits caused by direct contact between the positive and negative electrode plates, and further improving the drop resistance of the secondary battery.

In addition, compared to Comparative Example 1, Examples 1 to 17 show a significant reduction in interface black spots. This is because the reduced warping of the first outer electrode plate results in more stable bonding between the active material layer and the first current collector, reducing precipitation of lithium ions, and effectively alleviating lithium precipitation.

In Example 1, the thickness of the first adhesive layer is relatively small, resulting in relatively weak bonding strength with the accommodating portion, which may lead to bonding failure, causing the drop resistance of the lithium-ion battery to be inferior to other examples. In Example 9, the thickness of the first adhesive layer is relatively large, increasing the gap between the electrode assembly and the accommodating portion, which may require the first adhesive layer to support the electrode assembly within the accommodating portion. In addition, the first adhesive layer is polyurethane, with low strength, potentially leading to bonding failure during drops of the lithium-ion battery and causing a significant loss in the energy density of the battery. Therefore, in these embodiments of this application, the thickness of the first adhesive layer is preferably selected to be 3 µm to 20 µm.

It can be seen from Examples 12 and 13 and Examples 16 and 17 that when the second adhesive layer is used, the risk of drop failure of the lithium-ion battery can be further reduced. The electrode assembly has two outermost electrode plates. The second outer electrode plate is also provided with the second adhesive layer. This can further enhance the energy density, drop resistance, impact resistance, and safety of the secondary battery.

It should be noted that the foregoing embodiments are only used to illustrate the technical solutions of this application and are not intended to limit this application. Within the concept of this application, the foregoing embodiments or the technical features in different embodiments can also be combined, steps can be implemented in any order, and there are many other variations of different aspects of this application as described above, which are not provided in detail for brevity. Although this application has been described in detail with reference to the foregoing embodiments, those of ordinary skill in the art should understand that modifications can still be made to the technical solutions described in the foregoing embodiments, or equivalent replacements can be made to some technical features. Such modifications or replacements do not cause the essence of the corresponding technical solutions to depart from the scope of the technical solutions of these embodiments of this application.

## Claims

1. A secondary battery , comprising an accommodating portion and an electrode assembly accommodated within the accommodating portion , wherein the electrode assembly comprises positive electrode plates, separators, and negative electrode plates ; along a thickness direction of the positive electrode plates and the negative electrode plates , a plurality of positive electrode plates and a plurality of negative electrode plates are alternately stacked; and the separators are disposed between adjacent positive electrode plates and negative electrode plates ; wherein
along a first direction , an outermost electrode plate of the electrode assembly is a first outer electrode plate , wherein the first outer electrode plate comprises a first current collector and a first active material layer ; the first current collector has a first surface facing the first direction and a second surface facing a second direction ; the first active material layer is disposed on the second surface ; the first direction is a stacking direction; and the second direction is opposite to the first direction ; and
the secondary battery further comprises a plurality of first adhesive layers , wherein a portion of the first adhesive layer is bonded between the first surface and an inner wall of the accommodating portion , and another portion of the first adhesive layer is bonded to the first surface and at least a portion of the separator .

2. The secondary battery according to claim 1, wherein along the second direction , an outermost electrode plate of the electrode assembly is a second outer electrode plate ; the second outer electrode plate comprises a second current collector and a second active material layer ; the second current collector has a third surface facing the first direction and a fourth surface facing the second direction ; and the second active material layer is disposed on the third surface ; and
the secondary battery further comprises a plurality of second adhesive layers , wherein a portion of the second adhesive layer is bonded between the fourth surface and the inner wall of the accommodating portion , and another portion of the second adhesive layer is bonded to the fourth surface and at least a portion of the separator .

3. The secondary battery according to claim 1 or 2, wherein the first adhesive layer comprises a hot-melt adhesive and/or a pressure-sensitive adhesive.

4. The secondary battery according to any one of claims 1 to 3, wherein a melting point of the first adhesive layer is T°C, and 50°C ≤ T ≤ 70°C.

5. The secondary battery according to any one of claims 1 to 4, wherein the first adhesive layer comprises a polyurethane and/or vinyl acetate copolymer.

6. The secondary battery according to claim 2, wherein the first outer electrode plate and/or the second outer electrode plate is a positive electrode plate .

7. The secondary battery according to any one of claims 1 to 6, wherein along the first direction , a thickness of the first adhesive layer is H µm, wherein 3 µm ≤ H ≤ 20 µm.

8. The secondary battery according to any one of claims 1 to 7, wherein along a width direction of the first current collector , the first current collector has a first edge and a second edge ; and along a length direction of the first current collector , the first current collector has a third edge and a fourth edge ;
positions close to the first edge and the second edge on the first surface are each provided with the first adhesive layer ; and/or
positions close to the third edge and the fourth edge on the first surface are each provided with the first adhesive layer .

9. The secondary battery according to any one of claims 1 to 8, wherein along the first direction , the electrode assembly comprises a plurality of separators ; and the first adhesive layer is configured to bond at least two separators .

10. A method for preparing the secondary battery according to any one of claims 1 to 9, comprising:
providing positive electrode plates , negative electrode plates , and separators , alternately stacking a plurality of positive electrode plates and a plurality of negative electrode plates along a thickness direction of the positive electrode plates and the negative electrode plates , and disposing the separators between adjacent positive electrode plates and negative electrode plates to form an electrode assembly ;
adopting a first outer electrode plate as an outermost electrode plate along a first direction , wherein the first outer electrode plate has a first surface facing the first direction and a second surface facing a second direction , the second surface has a first active material layer , the first direction is a stacking direction, and the second direction is opposite to the first direction ;
bonding a first adhesive layer to the first surface ;
accommodating the electrode assembly within an accommodating portion and bonding the first adhesive layer to an inner wall of the accommodating portion ; and
melting the first adhesive layer at a first preset temperature and pressing the accommodating portion at a position corresponding to the first adhesive layer on an outer surface of the accommodating portion , such that the molten first adhesive layer flows to at least a portion of the separator .
